# FASCICULE DE BREVET EUROPEEN

(11) **EP 3 400 168 B1**
(45) Date de publication et mention de la délivrance du brevet: **20.11.2019**
(21) Numéro de dépôt: 17702672.1
(22) Date de dépôt: 04.01.2017
(51) Int. Cl.: B64C 11/06, F01D 7/00

(54) **PIVOT DE PALE A ORIENTATION REGLABLE POUR MOYEU DE SOUFFLANTE DE TURBOMACHINE**
VERSTELLPROPELLER FÜR TURBOFAN-TRIEBWERKE
PIVOT BLADE WITH VARIABLE PITCH FOR A TURBOFAN ENGINE

(30) Priorité: 05.01.2016 FR 1650040
(43) Date de publication de la demande: 14.11.2018
(73) Titulaire: Safran Aircraft Engines, 75015 Paris (FR)
(72) Inventeur: BELMONTE, Olivier, 77550 Moissy-Cramayel Cedex (FR); JACQUEMARD, Christophe, Paul, 77550 Moissy-Cramayel Cedex (FR); MOUTON, Clémentine, Charlotte, Marie, 77550 Moissy-Cramayel Cedex (FR); PATSOURIS, Emmanuel, Pierre, Dimitri, 77550 Moissy-Cramayel Cedex (FR)
(74) Mandataire: Cabinet Beau de Loménie
(86) Numéro de dépôt international: PCT/FR2017/050010
(87) Numéro de publication internationale: WO 2017/118808

(56) Documents cités:
- GB-A- 546 621
- US-A- 2 017 505

## Description

### Arrière-plan de l'invention

La présente invention se rapporte au domaine général des turbomachines équipées d'une ou deux soufflante(s) carénée(s) ou non carénée(s), et plus particulièrement à la commande de l'orientation des pales de soufflante(s) de ces turbomachines.

Un domaine privilégié d'application de l'invention concerne les turboréacteurs à hélices contrarotatives, appelés « Open Rotor » en anglais, qui comprennent deux hélices contrarotatives placées en aval (version « pusher » en anglais) ou en amont (version « puller » en anglais) du générateur de gaz. Toutefois, l'invention s'applique également aux turbopropulseurs à une ou plusieurs hélices propulsives.

Dans un turboréacteur à hélice(s), il est connu que l'orientation (ou calage) des pales qui forment ces hélices constitue l'un des paramètres permettant de gérer la poussée du turboréacteur, notamment en faisant fonctionner l'hélice toujours dans les meilleures conditions possibles. En effet, le régime des hélices est quasiment constant sur toutes les phases de fonctionnement, et c'est le calage des pales des hélices qui fait varier la poussée. Ainsi, en phase de vol de croisière, on cherche à obtenir la plus faible puissance possible sur l'arbre de turbine qui est nécessaire pour une traction donnée à une vitesse de l'avion donnée, de sorte à obtenir le meilleur rendement (c'est-à-dire le rendement permettant de minimiser la consommation de carburant et d'augmenter la distance franchissable). A l'inverse, au décollage, la traction la plus forte possible est recherchée afin d'accélérer puis de faire décoller l'avion.

Typiquement, chaque hélice comprend plusieurs pales de soufflante qui sont composées chacune d'un profil aérodynamique et d'un pivot. Les pivots remplissent plusieurs fonctions : par l'intermédiaire de paliers à roulement, ils assurent la rétention des pales de soufflante en fonctionnement et le guidage de celles-ci pour le calage de leur pas.

Par ailleurs, pour les architectures de turboréacteur de type « Open Rotor » en version « puller », le turboréacteur constitue en soi une enceinte huile dont il est nécessaire d'assurer l'étanchéité (ou d'en maîtriser les fuites). Or, sur les systèmes connus de pivots de pales de soufflante, la structure située en dessous de l'hélice n'étant pas une enceinte, cette fonction d'étanchéité n'est pas assurée.

De plus, avec les systèmes connus de pivots, il est nécessaire d'ouvrir le carter situé en amont de l'hélice pour pouvoir démonter les pivots et effectuer une maintenance sur les pales. Cependant, lorsqu'il s'agit d'un turboréacteur de type « Open Rotor » en version « puller », cette opération de maintenance est particulièrement fastidieuse puisqu'il est nécessaire de refaire toute l'installation de l'enceinte huile, ainsi que sa pressurisation. De plus, la présence de deux hélices, équipées de leurs arbres d'entraînement en rotation et de leurs systèmes de commande de l'orientation des pales, limite fortement l'accès aux pivots des pales de soufflante. Aussi, lorsqu'il est nécessaire d'effectuer une opération de maintenance sur un seul profil aérodynamique de pale de soufflante aval, la dépose moteur devient obligatoire et l'ensemble de l'hélice amont doit être démontée avec ses systèmes, de même que les systèmes de commande de l'hélice aval.

On connaît du document US 8,057,184 un pivot pour pale de soufflante dans lequel toutes les pièces formant le pivot voient tous les efforts (centrifuges et aérodynamiques), ce qui nécessite de sur-dimensionner ces pièces pour permettre au pivot de résister aux sollicitations en torsion, compression et extension. Par ailleurs, ce pivot génère plusieurs chemins d'effort concurrents, ce qui n'est pas souhaitable et rend le pivot difficilement démontable.

On connaît également du document FR 2,953,195 un pivot pour pale de soufflante dans lequel les billes du palier inférieur doivent être positionnées postérieurement au montage du pivot, ce qui rend le remplacement de ce palier complexe. De plus, toutes les pièces du pivot voient tous les efforts (centrifuges et aérodynamiques), ce qui nécessite de sur-dimensionner ces pièces pour permettre au pivot de résister aux sollicitations en torsion, compression et extension. Un autre pivot pour pale de turbosoufflante a été divulgué dans le document US2017505, montrant un plot 3, une pièce annulaire de découplage (10a, 10b) des effort positionnée autour du plot, des paliers 14, 15, un premier écrou de serrage 17 et un second écrou de serrage 24.

### Objet et résumé de l'invention

La présente invention a donc pour but principal de proposer un pivot de pale à orientation réglable qui ne présente pas les inconvénients précités.

Conformément à l'invention, ce but est atteint grâce à un pivot de pale à orientation réglable pour moyeu de soufflante de turbomachine, comprenant :
un plot ayant à une extrémité radiale intérieure des moyens d'accouplement pour la transmission d'un couple de torsion et un filetage externe ;
une pièce annulaire de découplage des efforts positionnée autour du plot et munie à une extrémité radiale extérieure d'un filetage externe, ladite pièce de découplage des efforts étant en appui transversal contre le plot au niveau de son extrémité radiale extérieure et dépourvue de contact avec ledit plot au niveau d'une extrémité radiale intérieure ;
un palier à roulement extérieur ayant une bague interne montée en appui transversal contre l'extrémité radiale extérieure de la pièce de découplage des efforts ;
un palier à roulement intérieur monté autour de l'extrémité radiale intérieure de la pièce de découplage des efforts et tenu par celle-ci;
une bague de transmission de calage positionnée autour de l'extrémité radiale intérieure du plot et muni de moyens d'accouplement coopérant avec les moyens d'accouplement du plot ;
un premier écrou de serrage vissé sur le filetage externe de la pièce de découplage des efforts pour assurer un serrage des paliers à roulement extérieur et intérieur autour du moyeu de soufflante ; et
un second écrou de serrage vissé sur le filetage externe du plot pour assurer un serrage entre eux du plot, de la pièce de découplage des efforts et de la bague de transmission de calage.

Le pivot selon l'invention est remarquable notamment en ce que, par le biais des différents éléments distincts qui le constituent, il permet de séparer les chemins d'effort. Ainsi, l'effort centrifuge subi par la pale de soufflante transite ici directement à travers le plot du pivot pour être repris radialement au niveau du palier à roulement intérieur. Les efforts transversaux (par rapport à l'axe du pivot) sont quant à eux repris par le palier à roulement supérieur en transitant par l'extrémité radiale extérieure de la pièce de découplage des efforts. De plus, le contact direct entre la bague interne du palier à roulement extérieur et la pièce de découplage des efforts permet de reprendre la majorité des efforts de flexion subis par la pale. Enfin, l'arrangement particulier du pivot selon l'invention permet de limiter les efforts de flexion (dus aux efforts aérodynamiques subis par la pale) dans le pivot.

Le pivot selon l'invention présente également l'avantage de dissocier les différentes fonctions qu'il assure. En particulier, s'il est nécessaire d'effectuer une maintenance sur le pivot, il n'est pas nécessaire de démonter l'ensemble des éléments de celui-ci (dont les paliers intérieur et extérieur et la pièce de découplage des efforts). De plus, le changement des paliers à roulement du pivot selon l'invention est relativement aisé puisque celui-ci permet de disposer d'un ensemble unitaire comprenant les deux bagues et les billes des paliers (ou les deux bagues séparées et un ensemble de billes prisonnières d'une cage). En dissociant les fonctions assurées par le pivot, il n'est également pas nécessaire d'effectuer une dépose moteur et de démonter l'ensemble de l'hélice pour intervenir sur une seule pale de soufflante.

On notera enfin que le pivot selon l'invention présente encore comme avantage de pouvoir être assemblé sur le moyeu de soufflante sans avoir à réaliser des pistes de roulement sur le moyeu, ce qui permet à celui-ci d'être réalisé dans un alliage de type titane.

Le palier à roulement extérieur peut comporter en outre une bague externe destinée à être logée à l'intérieur d'un orifice pratiqué dans le moyeu de soufflante et traversé par le pivot, les bagues interne et externe définissant des pistes de roulement pour une pluralité de billes. Dans ce cas, le premier écrou de serrage est de préférence vissé radialement contre la bague interne du palier à roulement extérieur.

Le palier à roulement intérieur peut comporter une bague externe montée autour de l'extrémité radiale intérieure de la pièce de découplage des efforts et définissant avec une surface externe de celle-ci des pistes de roulement pour une pluralité de billes.

Quant aux moyens d'accouplement du plot, ils peuvent être des cannelures externes et les moyens d'accouplement de la bague de transmission de calage être des cannelures internes coopérant avec les cannelures externes dudit plot.

Selon un mode de réalisation, le plot le plot comprend deux parties distinctes liées entre elles : une partie radiale comprenant les moyens d'accouplement pour la transmission d'un couple de torsion et le filetage externe de serrage, et une partie d'attache comprenant un perçage radial traversé par la partie radiale. Ce mode de réalisation permet d'avoir un alliage de type titane sur la partie ne comportant pas de filetage (à savoir la partie d'attache).

Dans ce mode de réalisation, la partie d'attache peut comprendre en outre un lamage formé autour du perçage et destiné à recevoir une collerette de la partie radiale pour assurer une liaison entre les deux parties du pivot.

L'invention a également pour objet une pale à angle de calage variable pour moyeu de soufflante de turbomachine, comprenant un profil aérodynamique et un pivot tel que défini précédemment. L'invention a encore pour objet une turbomachine comprenant au moins moyeu de soufflante et au moins un ensemble de ces pales à angle de calage variable.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue en coupe montrant un exemple d'implantation d'un pivot de pale de soufflante à orientation réglable selon un mode de réalisation de l'invention ;
- la figure 2 est une loupe de la figure 1 montrant plus précisément le pivot de pale ; et
- la figure 3 est une vue en coupe montrant un pivot selon un autre mode de réalisation de l'invention.

### Description détaillée de l'invention

L'invention s'applique à toute turbomachine équipée d'au moins une soufflante carénée ou non carénée, et dont les pales d'hélice (dans le cas d'une soufflante non carénée) ou les aubes de soufflante (dans le cas d'une soufflante carénée) sont équipées d'un système de changement de pas.

L'invention s'applique en particulier aux turbopropulseurs à une ou plusieurs hélices propulsives, ainsi qu'aux turboréacteurs à hélice(s) (appelés « Open Rotor » en anglais) qui comprennent une hélice (et un stator à calage variable pour l'USF - « Unducted Single Fan », soit « soufflante non carénée unique ») ou deux hélices contrarotatives placées en amont (en version « puller » en anglais) ou en aval (en version « pusher » en anglais) du générateur de gaz. L'invention s'applique encore aux turbomachines à soufflante carénée.

L'architecture de ces types de turbomachines est bien connue de l'homme du métier et ne sera donc pas décrite ici en détails. Brièvement, ces turbomachines comportent une ou plusieurs hélices (dans le cas d'une turbomachine à soufflante non carénée) ou une soufflante (dans le cas d'une turbomachine à soufflante carénée) constituées chacune d'un ensemble de pales (ou d'aubes) de soufflantes à angle de calage variable, c'est-à-dire que leur orientation peut être modifiée au moyen d'un système de commande de l'orientation des pales décrit ci-après.

Dans la suite de la description, on parlera d'hélice et de pales d'hélice indifféremment du fait que l'invention s'applique à une turbomachine à soufflante non carénée ou à une turbomachine à soufflante carénée (auquel cas l'hélice correspond à la soufflante de la turbomachine et les pales d'hélice correspondent aux aubes de soufflante).

Une hélice de turbomachine est constituée d'un ensemble de pales de soufflantes à angle de calage variable indépendant ou non, c'est-à-dire que leur orientation peut être modifiée au moyen d'un système de commande de l'orientation des pales.

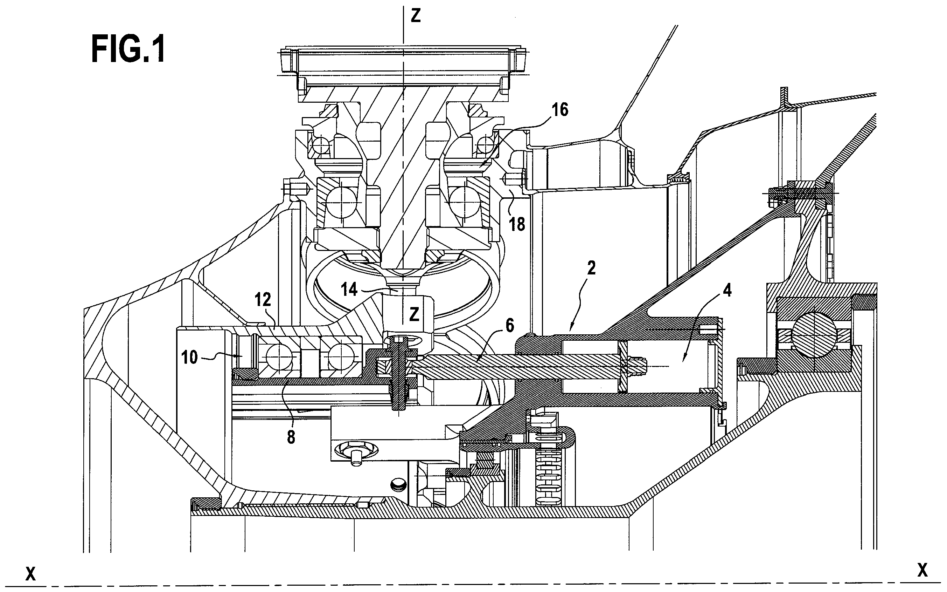

Comme représenté sur la figure 1, ce système de commande peut comprendre un vérin axial 2 centré sur l'axe de rotation X-X de l'hélice et fixe par rapport aux structures du moteur. Ce vérin 2 comprend une chambre 4 et des tiges 6 qui peuvent se déplacer axialement de manière synchronisée lorsque le vérin est actionné. A leur extrémité libre, les tiges 6 sont reliées à la bague intérieure 8 d'un palier à roulement de transfert de mouvement 10 dont la bague extérieure 12 est couplée, par l'intermédiaire de bras de levier 14, à des pivots 16 des pales de soufflante de l'hélice. Ainsi, lorsque le vérin 2 est actionné, les tiges 6 translatent pour déplacer le palier à roulement de transfert de mouvement 10, ce qui entraîne un pivotement des pivots 16 des pales de soufflante autour de leur axe radial Z-Z.

On notera qu'il est possible d'avoir une configuration inverse dans laquelle les tiges de vérin sont solidaires du carter de la turbomachine et le corps de vérin est mobile par rapport aux tiges de vérin.

De façon plus précise, le pivot 16 a pour fonction d'assurer la rétention de la pale de soufflante sur un moyeu rotatif 18 de soufflante et le guidage de celle-ci pour le calage de son pas.

A cet effet, le pivot 16 de la pale de soufflante est monté radialement dans un orifice 20 du moyeu 18 de l'hélice qu'il traverse de part en part, le moyeu étant centré sur l'axe longitudinal X-X de la turbomachine.

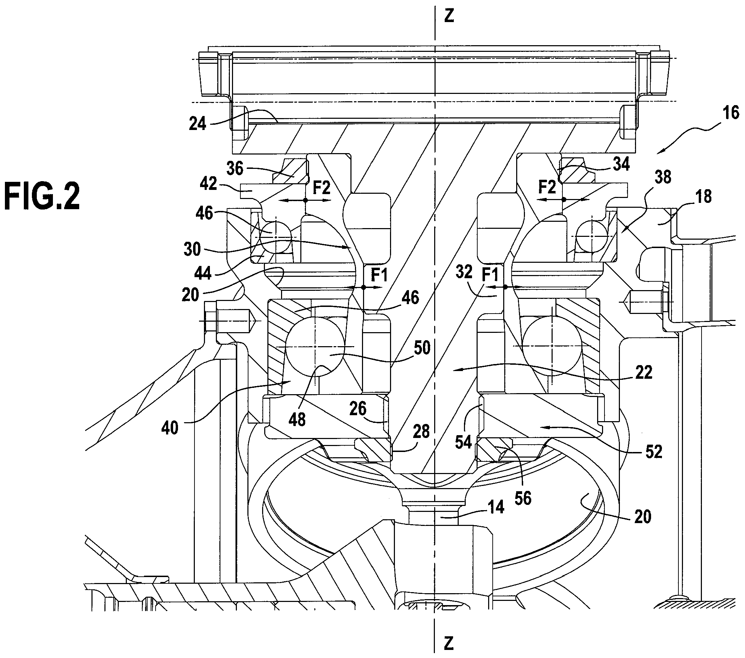

Selon l'invention, comme représenté sur la figure 2, le pivot 16 de la pale de soufflante comprend plusieurs éléments distincts qui sont assemblés entre eux de sorte à faciliter son montage/démontage du moyeu de l'hélice.

Ainsi, le pivot 16 comprend notamment un plot 22 qui s'étend selon l'axe radial Z-Z du pivot au travers de l'orifice 20 du moyeu 18 de soufflante et qui présente, à une extrémité radiale extérieure (c'est-à-dire au niveau de son extrémité la plus éloignée de l'axe X-X), une dent 24 qui est destinée à recevoir un pied de la pale de soufflante (non représenté sur les figures). Il est à noter que la pale de soufflante pourrait être unitaire avec le plot.

Au niveau de son extrémité radiale intérieure (c'est-à-dire au niveau de son extrémité la plus proche de l'axe X-X), le plot 22 comprend des cannelures externes 26 de transmission d'un couple de torsion et un filetage externe de serrage 28.

Le pivot 16 selon l'invention comprend encore une pièce annulaire de découplage des efforts 30 qui est positionnée autour du plot 22. Cette pièce de découplage des efforts est centrée sur l'axe radial Z-Z du plot 22, est en appui transversal contre le plot au niveau de son extrémité radiale extérieure et au niveau d'une collerette annulaire 32, et dépourvue de contact avec celui-ci au niveau d'une extrémité radiale intérieure. L'appui transversal entre la collerette 32 du plot et la pièce de découplage des efforts est schématisé sur la figure 2 par les flèches F1.

Au niveau de son extrémité radiale extérieure, la pièce de découplage des efforts 30 est munie d'un filetage externe 34 sur lequel est serré un premier écrou 36 également centré sur l'axe radial Z-Z du plot.

Le pivot 16 selon l'invention comprend encore un palier à roulement extérieur 38 (c'est-à-dire situé du côté extérieur du pivot) et un palier à roulement intérieur 40 (c'est-à-dire situé du côté intérieur du pivot) montés autour de la pièce de découplage des efforts, respectivement au niveau de l'extrémité radiale extérieure et d'une extrémité radiale intérieure de celle-ci.

De façon plus précise, le palier à roulement extérieur 38 est du type à contact oblique et comprend une bague interne 42 et une bague externe 44 qui définissent des pistes de roulement pour une pluralité de billes 46. La bague externe 44 vient en appui radial à l'intérieur de l'orifice 20 pratiqué dans le moyeu rotatif 18.

Quant à la bague interne 42 de ce palier à roulement extérieur, elle vient en appui transversal contre l'extrémité radiale extérieure de la pièce de découplage des efforts (cet appui est schématisé par les flèches F2 sur la figure 2). Le serrage du premier écrou de serrage 36 sur la pièce de découplage des efforts permet ainsi de mettre en contrainte ce palier à roulement extérieur 38.

Le palier à roulement intérieur 40 est du type à contact oblique et comprend une bague externe 47 également destinée à venir en appui radial à l'intérieur de l'orifice 20 pratiqué dans le moyeu 18 de soufflante. De plus, cette bague externe définit avec une surface externe 48 de l'extrémité radiale intérieure de la pièce de découplage des efforts 30 des pistes de roulement pour une pluralité de billes 50.

Le pivot 16 selon l'invention comprend également une bague de transmission de calage 52 formant également capot annulaire d'étanchéité pour une enceinte huile située à l'intérieur du système de commande. Cette bague de transmission de calage 52 est positionnée autour de l'extrémité radiale intérieure du plot 22 en étant centrée sur l'axe radial Z-Z de celui-ci. Cette bague de transmission de calage est munie de cannelures internes 54 coopérant avec les cannelures externes 26 dudit plot. Il est à noter que d'autres moyens d'accouplement que des cannelures pourraient être envisagés entre la bague de transmission de calage et le plot.

Un second écrou de serrage 56 est vissé sur le filetage externe 28 formé à l'extrémité radiale intérieure du plot 22 pour assurer un serrage radial entre le plot 22, la pièce de découplage des efforts 30, et la bague de transmission de calage 52. Ce serrage permet également d'assurer une mise en contrainte du palier à roulement intérieur 40.

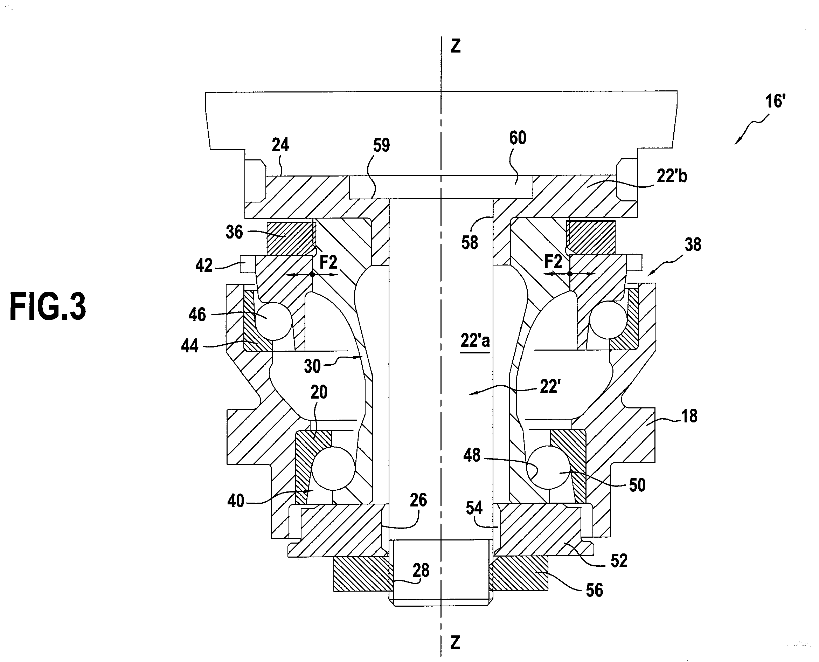

La figure 3 représente une variante de réalisation du pivot selon l'invention. Sur cette figure 3, les éléments du pivot 16' qui sont identiques à ceux du pivot du mode de réalisation de la figure 2 portent la même référence.

Ici, le plot 22' du pivot 16' se compose de deux parties distinctes liées entre elles, à savoir une partie radiale 22'a comprenant les cannelures externes 26 de transmission d'un couple de torsion et le filetage externe de serrage 34, et une partie d'attache 22'b comprenant la dent 24 et un perçage radial 58 traversé par la partie radiale 22'a.

Dans ce cas, la partie d'attache 22'b comprend en outre un lamage 59 formé autour du perçage 58 et destiné à recevoir une collerette 60 de la partie radiale 22'a pour assurer une liaison entre les deux parties du pivot.

L'avantage de séparer le plot en deux parties distinctes est qu'il est possible d'utiliser deux matériaux différents pour réaliser ces deux parties du plot et ainsi gagner en masse.

Quel que soit le mode de réalisation, le montage du pivot selon l'invention est ainsi relativement aisé et s'effectue en dévissant dans un premier temps l'écrou de serrage 56, puis en retirant la bague de transmission de calage 52 et le plot 22, les paliers extérieur 38 et intérieur 40 restant toujours en place. Il est ainsi possible de changer ou d'inspecter facilement les pièces retirées. Ensuite, il suffira de dévisser l'écrou de serrage 36 pour pouvoir changer les paliers à roulement 38, 40.

## Revendications

1. Pivot (16 ; 16') de pale à orientation réglable pour moyeu (18) de soufflante de turbomachine, comprenant :
un plot (22 ; 22') ayant à une extrémité radiale intérieure des moyens d'accouplement (26) pour la transmission d'un couple de torsion et un filetage externe (28) ;
une pièce annulaire de découplage des efforts (30) positionnée autour du plot et munie à une extrémité radiale extérieure d'un filetage externe (34), ladite pièce de découplage des efforts étant en appui transversal (F2) contre le plot au niveau de son extrémité radiale extérieure et dépourvue de contact avec ledit plot au niveau d'une extrémité radiale intérieure ;
un palier à roulement extérieur (38) ayant une bague interne (42) montée en appui transversal contre l'extrémité radiale extérieure de la pièce de découplage des efforts ;
un palier à roulement intérieur (40) monté autour de l'extrémité radiale intérieure de la pièce de découplage des efforts et tenu par celle-ci;
une bague de transmission de calage (52) positionnée autour de l'extrémité radiale intérieure du plot et muni de moyens d'accouplement (54) coopérant avec les moyens d'accouplement (26) du plot ;
un premier écrou de serrage (36) vissé sur le filetage externe (34) de la pièce de découplage des efforts (30) pour assurer un serrage des paliers à roulement extérieur et intérieur autour du moyeu (18) de soufflante ; et
un second écrou de serrage (56) vissé sur le filetage externe (28) du plot pour assurer un serrage entre eux du plot, de la pièce de découplage des efforts et de la bague de transmission de calage.

2. Pivot selon la revendication 1, dans lequel le palier à roulement extérieur (38) comporte en outre une bague externe (44) destinée à être logée à l'intérieur d'un orifice (20) pratiqué dans le moyeu (18) de soufflante et traversé par le pivot (16), les bagues interne (42) et externe (44) définissant des pistes de roulement pour une pluralité de billes (46).

3. Pivot selon la revendication 2, dans lequel le premier écrou de serrage (36) est vissé radialement contre la bague interne du palier à roulement extérieur.

4. Pivot selon l'une quelconque des revendications 1 à 3, dans lequel le palier à roulement intérieur (40) comporte une bague externe (47) montée autour de l'extrémité radiale intérieure de la pièce de découplage des efforts et définissant avec une surface externe (48) de celle-ci des pistes de roulement pour une pluralité de billes (50).

5. Pivot selon l'une quelconque des revendications 1 à 4, dans lequel les moyens d'accouplement du plot (22) sont des cannelures externes (26) et les moyens d'accouplement de la bague de transmission de calage (52) sont des cannelures internes (54) coopérant avec les cannelures externes (26) dudit plot.

6. Pivot (16') selon l'une quelconque des revendications 1 à 5, dans lequel le plot (22') comprend deux parties distinctes liées entre elles : une partie radiale (22'a) comprenant les moyens d'accouplement pour la transmission d'un couple de torsion et le filetage externe de serrage, et une partie d'attache (22'b) comprenant un perçage radial (58) traversé par la partie radiale.

7. Pivot selon la revendication 6, dans lequel la partie d'attache (22'b) comprend en outre un lamage (59) formé autour du perçage (58) et destiné à recevoir une collerette (60) de la partie radiale (22'a) pour assurer une liaison entre les deux parties du pivot.

8. Pale à angle de calage variable pour moyeu (18) de soufflante de turbomachine comprenant un profil aérodynamique et un pivot (16 ; 16') selon l'une quelconque des revendications 1 à 7.

9. Turbomachine comprenant au moins un moyeu (18) de soufflante et au moins un ensemble de pales à angle de calage variable selon la revendication 8.

## Patentansprüche

1. Drehzapfen (16; 16') einer Schaufel mit einstellbarer Ausrichtung für eine Nabe (18) eines Gebläses einer Turbomaschine, umfassend:
einen Stift (22; 22'), der an einem inneren radialen Ende Kopplungsmittel (26) für die Übertragung eines Drehmoments und ein Außengewinde (28) aufweist,
ein ringförmiges Kraftentkopplungsteil (30), das um den Stift herum angeordnet ist und an einem äußeren radialen Ende mit einem Außengewinde (34) versehen ist, wobei das Kraftentkopplungsteil an dem Stift im Bereich seines äußeren radialen Endes in Queranlage (F2) ist und im Bereich eines inneren radialen Endes keinen Kontakt mit dem Stift hat,
ein äußeres Wälzlager (38), das einen Innenring (42) aufweist, der in Queranlage an dem äußeren radialen Ende des Kraftentkopplungsteils angebracht ist,
ein inneres Wälzlager (40), das um das innere radiale Ende des Kraftentkopplungsteils angebracht ist und durch dieses gehalten wird,
einen Klemmübertragungsring (52), der um das innere radiale Ende des Stiftes herum angeordnet ist und mit Kopplungsmitteln (54) versehen ist, die mit den Kopplungsmitteln (26) des Stiftes zusammenwirken,
eine erste Spannmutter (36), die auf das Außengewinde (34) des Kraftentkopplungsteils (30) geschraubt ist, um ein Festklemmen des äußeren und des inneren Wälzlagers um die Nabe (18) des Gebläses herum sicherzustellen, und
eine zweite Spannmutter (56), die auf das Außengewinde (28) des Stiftes geschraubt ist, um ein Festklemmen des Stiftes, des Kraftentkopplungsteils und des Klemmübertragungsrings zwischen ihnen sicherzustellen.

2. Drehzapfen nach Anspruch 1, bei dem das äußere Wälzlager (38) ferner einen Außenring (44) aufweist, der dazu bestimmt ist, innerhalb einer Öffnung (20) aufgenommen zu werden, die in der Nabe (18) des Gebläses ausgebildet ist und von dem Drehzapfen (16) durchgriffen wird, wobei der Innenring (42) und der Außenring (44) Laufspuren für eine Vielzahl von Kugeln (46) definieren.

3. Drehzapfen nach Anspruch 2, bei dem die erste Spannmutter (36) radial gegen den Innenring des äußeren Wälzlagers geschraubt ist.

4. Drehzapfen nach einem der Ansprüche 1 bis 3, bei dem das innere Wälzlager (40) einen Außenring (47) aufweist, der um das innere radiale Ende des Kraftentkopplungsteils herum angebracht ist und mit einer Außenfläche (48) dessen Laufspuren für eine Vielzahl von Kugeln (50) definiert.

5. Drehzapfen nach einem der Ansprüche 1 bis 4, bei dem die Kopplungsmittel des Stiftes (22) Außenrillen (26) sind und die Kopplungsmittel des Klemmübertragungsrings (52) Innenrillen (54) sind, die mit den Außenrillen (26) des Stiftes zusammenwirken.

6. Drehzapfen (16') nach einem der Ansprüche 1 bis 5, bei dem der Stift (22') zwei separate, untereinander verbundene Teile aufweist: einen radialen Teil (22'a), der die Kopplungsmittel für die Übertragung eines Drehmoments und das äußere Klemmgewinde umfasst, und einen Befestigungsteil (22'b), der eine radiale Bohrung (58) umfasst, die von dem radialen Teil durchgriffen wird.

7. Drehzapfen nach Anspruch 6, bei dem der Befestigungsteil (22'b) ferner eine Senkung (59) aufweist, die um die Bohrung (58) herum ausgebildet und dazu bestimmt ist, einen Kragen (60) des radialen Teils (22'a) aufzunehmen, um eine Verbindung zwischen den beiden Teilen des Drehzapfens sicherzustellen.

8. Schaufel mit variablem Anstellwinkel für eine Nabe (18) eines Gebläses einer Turbomaschine, umfassend ein aerodynamisches Profil und einen Drehzapfen (16; 16') nach einem der Ansprüche 1 bis 7.

9. Turbomaschine, die wenigstens eine Gebläsenabe (18) und wenigstens eine Anordnung von Schaufeln mit variablem Anstellwinkel nach Anspruch 8 umfasst.

## Claims

1. A pivot (16; 16') for an adjustable pitch blade for a turbine engine fan hub (18), the pivot comprising:
a stud (22; 22') having, at a radially inner end, coupling means (26) for transmitting a twisting torque and an outside thread (28);
an annular force-decoupling part (30) positioned around the stud and provided at a radially outer end with an outside thread (34), said force-decoupling part pressing transversely (F2) against the stud at its radially outer end and having no contact with said stud at a radially inner end;
an outer rolling bearing (38) having an inside ring (42) mounted to press transversely against the radially outer end of the force-decoupling part;
an inner rolling bearing (40) assembled around the radially inner end of the force-decoupling part and held thereby;
a pitch transmission ring (52) positioned around the radially inner end of the stud and provided with coupling means (54) co-operating with the coupling means (26) of the stud;
a first clamping nut (36) screwed onto the outside thread (34) of the force-decoupling part (30) in order to clamp the outer and inner rolling bearings around the fan hub (18); and
a second clamping nut (56) screwed onto the outside thread (28) of the stud in order to provide clamping between the stud, the force-decoupling part, and the pitch transmission ring.

2. A pivot according to claim 1, wherein the outer rolling bearing (38) also has an outside ring (44) for being received inside an orifice (20) formed in the fan hub (18) and having the pivot (16) passing therethrough, the inside and outside rings (42, 44) defining raceways for a plurality of balls (46).

3. A pivot according to claim 2, wherein the first clamping nut (36) is screwed radially against the inside ring of the outer rolling bearing.

4. A pivot according to any one of claims 1 to 3, wherein the inner rolling bearing (40) includes an outside ring (47) mounted around the radially inner end of the force-decoupling part and co-operating with an outside surface (48) thereof to define raceways for a plurality of balls (50).

5. A pivot according to any one of claims 1 to 4, wherein the coupling means of the stud (22) are outer flutings (26) and the coupling means of the pitch transmission ring (52) are inner flutings (54) co-operating with the outer flutings (26) of said stud.

6. A pivot (16') according to any one of claims 1 to 5, wherein the stud (22') comprises two distinct portions that are connected together: a radial portion (22'a) having the coupling means for transmitting twisting torque and the outside clamping thread; and an attachment portion (22'b) including a radial hole (58) having the radial portion passed therethrough.

7. A pivot according to claim 6, wherein the attachment portion (22'b) further includes a spot face (59) formed around the hole (58) in order to receive a collar (60) of the radial portion (22'a) so as to provide a connection between the two portions of the pivot.

8. A blade of variable pitch angle for a turbine engine fan hub (18), the blade comprising an aerodynamic profile and a pivot (16; 16') according to any one of claims 1 to 7.

9. A turbine engine including a fan hub (18) and at least one set of blades of variable pitch angle according to claim 8.
